# EUROPEAN PATENT APPLICATION

(11) **EP 4 234 311 A1**
(43) Date of publication of application: **30.08.2023**
(21) Application number: 21954091.1
(22) Date of filing: 29.12.2021
(51) Int. Cl.: B60L 53/22, H02J 7/00

(54) **ONLINE POWER SUPPLY AND CHARGING SYSTEM AND CONTROL METHOD**

(30) Priority: 18.08.2021 CN 202110948891
(71) Applicant: Xi'an Linchr Infinity New Energy Technology Co., Ltd., Xi'an, Shaanxi 710000 (CN)
(72) Inventor: SHEN, Degui, Xi'an, Shaanxi 710000 (CN); SUN, Yongkui, Xi'an, Shaanxi 710000 (CN); JIA, Zhiyun, Xi'an, Shaanxi 710000 (CN)
(74) Representative: Barker Brettell LLP
(86) International application number: PCT/CN2021/142717
(87) International publication number: WO 2023/019856

(57) **Abstract**

The present invention provides an online power supply and charging system and a control method. A vehicle-mounted charger module is connected with an external power source and supplies a power to an electric motor module; through a switch module, a battery module and the electric motor module are electrically connected or disconnected, and the vehicle-mounted charger module and the battery module are electrically connected or disconnected; and a voltage conversion module performs voltage conversion on an output voltage of the battery module, and supplies the power to the electric motor module, and the voltage conversion module performs voltage conversion on an input voltage of the voltage conversion module, and charges the battery module, such that the current of charging of the battery module and the current of discharging of the battery module are controlled, and the number of times of the charging of the battery module and the discharging of the battery module are reduced. In response to the electric motor module suddenly stopping running, voltage conversion can be performed on an input current of a battery through the voltage conversion module, thereby guaranteeing the safety of the battery; and the requirement for the capacity for the battery module is relatively low, thereby greatly reducing the cost of the whole system.

## Description

### Cross-Reference to Related Application

The present invention claims priority to the Chinese patent application No. 202110948891.3, filed to the China National Intellectual Property Administration on August 18th, 2021, and entitled "Online Power Supply and Charging System and Control Method", the entire contents of which are herein incorporated herein by reference.

### Technical Field

The present invention relates to the technical field of vehicle power supply, and in particular to online power supply and charging system and a control method.

### Background

At present, a pure electric construction machinery vehicle generally uses a vehicle-mounted charger to directly supply power to the electric motor, or uses a built-in battery to supply the power to the electric motor.

### Technical problems

The allowable charging current of the built-in battery must be greater than the maximum output current of the vehicle-mounted charger, otherwise, in response to the electric motor suddenly stopping running, the vehicle-mounted charger cannot respond in time, which will lead to charging of the built-in battery at high current, causing safety problems to the built-in battery. Moreover, due to the high allowable charging current of the built-in battery, a high capacity is required for the built-in battery, and the cost of the built-in battery accounts for nearly 70% of the whole power system, thereby resulting in high system cost.

### SUMMARY

The present application provides an online power supply and charging system and a control method, in order to solve the problems of low safety and high cost in the traditional online power supply and charging system.

In order to achieve the above-mentioned object, an embodiment of the present invention provides an online power supply and charging system, applied to a construction machinery vehicle, including:
an electric motor module, configured to control an operation process of the construction machinery vehicle;
a battery module, configured to receive a electric energy or release electric energy;
a vehicle-mounted charger module, electrically connected with the electric motor module, and configured to be connected to an external power source to supply a power to the electric motor module;
a switch module, electrically connected with the electric motor module, the battery module and the vehicle-mounted charger module, configured to electrically connect or disconnect the battery module and the electric motor module, and configured to electrically connect or disconnect the vehicle-mounted charger module and the battery module;
a voltage conversion module, electrically connected with the switch module, the electric motor module, the battery module and the vehicle-mounted charger module, and configured to perform voltage conversion on an output voltage of the battery module to supply power to the electric motor module, and perform voltage conversion on an input voltage of the voltage conversion module to charge the battery module.

In an optional embodiment, the online power supply and charging system further including:
a vehicle controller, electrically connected with the electric motor module, the battery module, the vehicle-mounted charger module and the switch module, and configured to control a working state of the electric motor module, control a charging process of the battery module or a discharging process of the battery module, control the vehicle-mounted charger module to be connected to the external power source, and control an on-off state of the switch module.

In an optional embodiment, the battery module including:
a power battery, electrically connected with the voltage conversion module and the switch module, and configured to store the electric energy; and
a battery management unit, electrically connected with the power battery and the voltage conversion module, and configured to control a charging process of the power battery or a discharging process of the power battery and control the voltage conversion module to perform voltage conversion on the input voltage of the power battery or the output voltage of the power battery.

In an optional embodiment, the electric motor module including:
an electric motor, configured to supply the power to the construction machinery vehicle; and
an electric motor controller, electrically connected with the electric motor, the vehicle-mounted charger module, the voltage conversion module and the switch module, and configured to control the electric motor to operate.

In an optional embodiment, the voltage conversion module includes a bidirectional DC-DC converter.

In an optional embodiment, the vehicle-mounted charger module includes a direct-contact power taking apparatus and a non-contact power taking apparatus.

In an optional embodiment, a battery capacity of the battery module is 10 to 50 KWh.

In an optional embodiment, the switch module includes an electromagnetic relay.

In an optional embodiment, the construction machinery vehicle includes a pure electric vehicle.

An embodiment of present invention further further provides a control method of an online power supply and a charging system, applied to the online power supply and a charging system, including:
controlling a voltage conversion module to perform voltage conversion on an output voltage of a battery module to supply a power to an electric motor module; or
controlling a vehicle-mounted charger module to supply power to the electric motor module and the battery module, controlling the voltage conversion module to perform voltage conversion on an input voltage of the voltage conversion module or the output voltage of the battery module so as to charge the battery module or discharge the battery module.

In an optional embodiment, the controlling the voltage conversion module to perform voltage conversion on the output voltage of the battery module and supply the power to the electric motor module including:
controlling, the switch module to electrically disconnect the battery module and the electric motor module, and boosting, through the voltage conversion module, the output voltage of the battery module to supply the power to the electric motor module in response to the vehicle-mounted charger module being electrically disconnected from the electric motor module and the voltage conversion module and the output voltage of the battery module being less than a required voltage of the electric motor module.

In an optional embodiment, the controlling the vehicle-mounted charger module to supply the power to the electric motor module and the battery module, and controlling the voltage conversion module to perform voltage conversion on the input voltage of the voltage conversion module or the output voltage of the battery module to charge or discharge the battery module including:
controlling the switch module to electrically disconnect the battery module and the electric motor module, supplying power to the voltage conversion module and the electric motor module by the vehicle-mounted charger module, and performing voltage conversion on the input voltage of the voltage conversion module or the output voltage of the battery module to charge the battery module or discharge the battery module through the voltage conversion module in response to the vehicle-mounted charger module being electrically connected to the voltage conversion module and the electric motor module.

In an optional embodiment, the control method further including:
supplying, power to the electric motor module through the vehicle-mounted charger module in response to the switch module being turned off and the vehicle-mounted charger module and the voltage conversion module being electrically disconnected.

In an optional embodiment, the control method further including:
controlling a switch module to electrically connect the battery module and the electric motor module, supplying power to the electric motor module through the battery module in response to the vehicle-mounted charger module being electrically disconnected from the electric motor module and the voltage conversion module and the output voltage of the battery module being greater than or equal to the required voltage of the electric motor module.

In an optional embodiment, the control method further including:
controlling the switch module to electrically connect the vehicle-mounted charger module and the battery module, and charging the battery module through the vehicle-mounted charger module in response to the electric motor normally stopping running.

Compared with the related art, the embodiments of the present invention have the following beneficial effects: based on the online power supply and charging system, the vehicle-mounted charger module is connected with an external power source and supplies a power to an electric motor module; through a switch module, a battery module and the electric motor module are electrically connected or disconnected, and the vehicle-mounted charger module and the battery module are electrically connected or disconnected; and a voltage conversion module performs voltage conversion on an output voltage of the battery module, and supplies the power to the electric motor module, and the voltage conversion module performs voltage conversion on an input voltage of the voltage conversion module, and charges the battery module, such that the current of charging of the battery module and the current of discharging of the battery module are controlled, and the number of times of the charging of the battery module and the discharging of the battery module are reduced. In response to the electric motor module suddenly stopping running, voltage conversion can be performed on an input current of a battery through the voltage conversion module, thereby guaranteeing the safety of the battery; and the requirement for the capacity for the battery module is relatively low, thereby greatly reducing the cost of the whole system.

### Beneficial effects

Based on the online power supply and charging system, the vehicle-mounted charger module is connected with an external power source and supplies a power to an electric motor module; through a switch module, a battery module and the electric motor module are electrically connected or disconnected, and the vehicle-mounted charger module and the battery module are electrically connected or disconnected; and a voltage conversion module performs voltage conversion on an output voltage of the battery module, and supplies the power to the electric motor module, and the voltage conversion module performs voltage conversion on an input voltage of the voltage conversion module, and charges the battery module, such that the current of charging of the battery module and the current of discharging of the battery module are controlled, and the number of times of the charging of the battery module and the discharging of the battery module are reduced. In response to the electric motor module suddenly stopping running, voltage conversion can be performed on an input current of a battery through the voltage conversion module, thereby guaranteeing the safety of the battery; and the requirement for the capacity for the battery module is relatively low, thereby greatly reducing the cost of the whole system.

### Brief Description

To describe the technical solutions of the embodiments of the present invention more clearly, the following briefly introduces the accompanying drawings required for describing the embodiments or the related art. Apparently, the accompanying drawings in the following description show some embodiments of the present invention, and a person of ordinary skill in the art may still derive other drawings from these accompanying drawings without creative efforts.

Fig. 1 is a schematic structural diagram of an online power supply and charging system according to an embodiment of the present invention.

Fig. 2 is a specific schematic structural diagram of the online power supply and charging system according to an embodiment of the present invention.

### Description of reference signs:

1-Electric Motor Module, 11-Electric Motor, 12-Electric Motor controller, 2-Battery Module, 21-Power Battery, 22-Battery Management Unit, 3-Vehicle-Mounted Charger Module, 4-Switch Module, 5-Voltage Conversion Module, 6-Vehicle Controller.

### Detailed Description

In order to make the technical problems to be solved, technical solutions and beneficial effects of the present invention more clearly, the present invention will be described in detail below with reference to the accompanying drawing and embodiments. It should be understood that the specific embodiments described herein are illustrative of the present invention and are not intended to limit the present invention.

In addition, the terms "first" and "second" are used for descriptive purposes, and cannot be understood as indicating or implying relative importance or implicitly indicating the number of indicated technical features. Thus, the features defined with "first" and "second" may explicitly or implicitly include at least one of the features. In the description of the present invention, "multiple" means two or more than two, unless otherwise specifically defined.

At present, a traditional pure electric construction machinery vehicle generally uses a vehicle-mounted charger to directly supply the power to the electric motor, or uses a built-in battery to supply power to the electric motor. Besides, the allowable charging current of the built-in battery must be greater than the maximum output current of the vehicle-mounted charger, otherwise, in response to the electric motor suddenly stopping running, the vehicle-mounted charger will charge the built-in battery at high current, causing damage to the built-in battery. Moreover, the uncontrollable charging or discharging current and frequent charging or discharging of the built-in battery reduce the remaining number of times of charging or discharging and shorten the service life of the built-in battery. Due to the high allowable charging current of the built-in battery, a high capacity is required for the built-in battery, and the cost of the built-in battery accounts for nearly 70% of the whole power system, which leads to a limited selection of the capacity of the built-in battery and a higher system cost, thereby being not conducive to the reduction of vehicle cost and the standardization of batteries. Moreover, the built-in battery with a low voltage cannot supply power to the electric motor together with the vehicle-mounted charger, and it can supply the power to the electric motor after being charged to a preset voltage, thereby affecting the maximum power of the vehicle.

Therefore, the present invention provides an online power supply and charging system, a voltage conversion module performs voltage conversion on an output voltage of the battery module, and supplies power to the electric motor module, or the voltage conversion module performs voltage conversion on an input voltage of the voltage conversion module, and charges the battery module, such that the current of charging or discharging of the battery module is controlled, and the number of times of charging or discharging of the battery module is reduced, thereby guaranteeing the safety of the battery and reducing the cost.

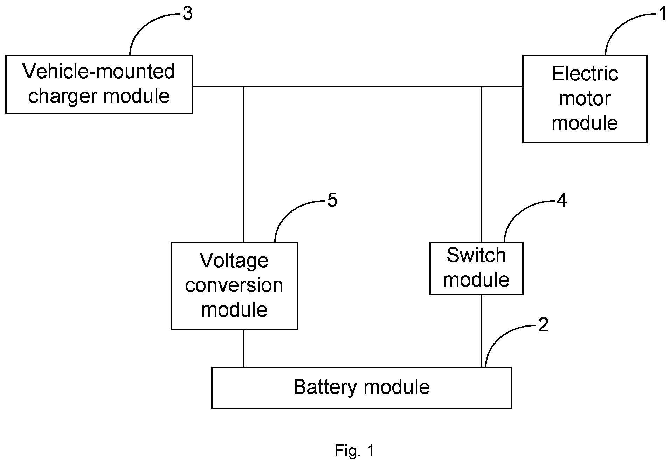

The online power supply and charging system based on the present invention will be illustrated by way of examples in conjunction with the accompanying drawings. Fig. 1 is a schematic structural diagram of an online power supply and charging system according to an embodiment of the present invention. As shown in Fig. 1, for the convenience of description, parts related to this embodiment are shown. The details are as follows: exemplarily, an online power supply and charging system, applied to a construction machinery vehicle, including:
an electric motor module 1, configured to control an operation process of the construction machinery vehicle;
a battery module 2, configured to receive a electric energy or release the electric energy;
a vehicle-mounted charger module 3, electrically connected with the electric motor module 1, and configured to be connected to an external power source and supply a power to the electric motor module 1;
a switch module 4, electrically connected with the electric motor module 1, the battery module 2 and the vehicle-mounted charger module 3, and configured to electrically connect or disconnect the battery module 2 and the electric motor module 1 and electrically connect or disconnect the vehicle-mounted charger module 3 and the battery module 2;
a voltage conversion module 5, electrically connected with the switch module 4, the electric motor module 1, the battery module 2 and the vehicle-mounted charger module 3, configured to perform voltage conversion on an output voltage of the battery module 2 and supply power to the electric motor module 1, perform voltage conversion on an input voltage of the voltage conversion module 5 and charge the battery module 1.

In this embodiment of the present invention, in response to the vehicle-mounted charger module and the electric motor module being electrically connected, the vehicle-mounted charger module is connected with the external power source (i.e., the vehicle-mounted charger module is in an external power source online state) and supplies the power to the electric motor module, the switch module may be turned on or turned off to make the battery module supply power to the electric motor module or make the vehicle-mounted charger module charge the battery module, and the voltage conversion module may perform voltage conversion (e.g., boost conversion) on the output voltage of the battery module and supply the power to the electric motor module, or perform voltage conversion (e.g., buck conversion or boost conversion) on the input voltage of the voltage conversion module and charge the battery module, so that the input voltage and the output voltage of the battery module can be controlled, thereby preventing the overhigh voltage from damaging the battery module. This not only improves the safety of the battery module, but also lowers the capacity required for the battery, thereby reducing the production cost of the system. Moreover, in a case of a low voltage of the battery module, the voltage conversion module may boost the voltage and directly supply the power to the electric motor module, which avoids the defect that the traditional online charging or discharging system can supply power to the electric motor module after charging the battery module, thereby reducing the consumption of the remaining number of times of charging or discharging of the battery module, prolonging the service life of the battery, improving the power supply efficiency and guaranteeing the maximum power of the vehicle.

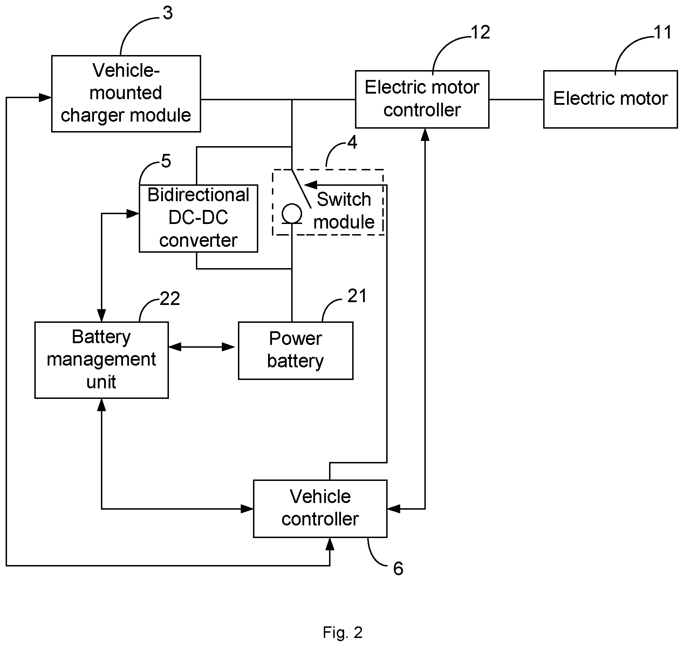

Fig. 2 is a specific schematic structural diagram of the online power supply and charging system according to an embodiment of the present invention. As shown in Fig. 2, exemplarily, the online power supply and charging system further including:
a vehicle controller 6, electrically connected to the electric motor module 1, the battery module 2, the vehicle-mounted charger module 3 and the switch module 4, configured to control a working state of the electric motor module 1, control a charging process of the battery module or a discharging process of the battery module 2, control the vehicle-mounted charger module 3 to be connected to the external power source, and control an on-off state of the switch module 4.

In this embodiment of the present invention, the vehicle controller controls the start and stop of the electric motor module, the vehicle controller controls the charging of the battery module and discharging of the battery module, and thereby, the voltage conversion module is controlled to perform voltage conversion on the input voltage of the voltage conversion module or the output voltage of the battery module. Thereby, in response to the input voltage being too high, it can be bucked, thereby protecting the battery module; or in response to the output voltage being too low, it can be boosted, so that the power can be supplied to the electric motor module normally. The vehicle controller controls the vehicle-mounted charger module to be connected with the external power source and supply the power to the electric motor module or voltage conversion module, and the vehicle control unit controls the on-off state of the switch module.

As shown in Fig. 2, exemplarily, the battery module 2 including:
a power battery 21, electrically connected with the voltage conversion module 5 and the switch module 4, and configured to store the electric energy;
a battery management unit 22, electrically connected to the power battery 21 and the voltage conversion module 5, configured to control a charging process of the power battery or a discharging process of the power battery 21 and control the voltage conversion module 5 to perform voltage conversion on the input voltage of the power battery or the output voltage of the power battery 21.

In this embodiment of the present invention, the battery management unit sends a power demand to the vehicle-mounted charger module based on a charging instruction transmitted from the vehicle controller, thereby realizing the process of charging the power battery. The battery management unit also sends a boost or buck instruction to the voltage conversion module, so that the output voltage of the power battery is boosted to meet the power supply demand of the electric motor module, or the input voltage of the power battery is bucked to prevent an overhigh voltage from damaging the power battery.

As shown in Fig. 2, exemplarily, the electric motor module 1 including:
an electric motor 11, configured to supply the power to the construction machinery vehicle; and
an electric motor controller, electrically connected with the electric motor 11, the vehicle-mounted charger module 3, the voltage conversion module 5 and the switch module 4, configured to control the electric motor to operate.

In this embodiment, through the electric motor controller, the electric energy is acquired from the voltage conversion module or vehicle-mounted charger module, thereby completing the driving operation of the electric motor module.

As shown in Fig. 2, the voltage conversion module include a bidirectional DC-DC converter (i.e., Direct current-Direct current converter).

In this embodiment of the present invention, the voltage conversion module include the bidirectional DC-DC converter, so that boost or buck conversion can be performed on the output voltage or the input voltage of the battery module. Thereby, in response to the battery module being at a low voltage, the voltage can be boosted to satisfy the required voltage of the electric motor module; and in response to the input voltage being too high, the battery module can be charged after the voltage is bucked, thereby protecting the battery module and preventing the overhigh voltage from damaging the battery module.

Exemplarily, the vehicle-mounted charger module including a direct-contact power taking apparatus and a non-contact power taking apparatus.

In this embodiment of the present invention, the vehicle-mounted charger module including the direct-contact power taking apparatus and the non-contact power taking apparatus, so that the power can be taken from the power grid in a direct contact manner or a non-contact manner, thereby realizing online charging of the present invention.

Exemplarily, a battery capacity of the battery module is 10 to 50 KWh.

In this embodiment of the present invention, the battery capacity of the battery module is 10 to 50 KWh, for example, 16 KWh, so that the capacity required for the battery module is greatly reduced, thereby effectively reducing the production cost of the whole system.

Exemplarily, the switch module including an electromagnetic relay.

In this embodiment of the present invention, the switch module including the electromagnetic relay, so that the switch module can be turned on or turned off based on the on/off instruction controlled by the vehicle.

Exemplarily, the construction machinery vehicle including a pure electric vehicle.

In this embodiment of the present invention, the construction machinery vehicle including the pure electric vehicle, so that the system is not only applicable to large construction machinery vehicles for engineering construction, but also applicable to common pure electric vehicles. The system has a wide application range.

Exemplarily, this embodiment provides a construction machinery vehicle, applied to an online power supply and charging system.

In this embodiment of the present invention, the construction machinery vehicle applies the online power supply and charging system of the present invention. Thereby, in response to only the vehicle-mounted charger module and the electric motor module being electrically connected inside the construction machinery vehicle, since the vehicle-mounted charger module is connected with the external power source and supplies power to the electric motor module, by turning on or turning off the switch module, the battery module can supply the power to the electric motor module, or the vehicle-mounted charger module can charge the battery module; and the voltage conversion module can perform voltage conversion on the output voltage of the battery module and supply power to the electric motor module, or the voltage conversion module can perform voltage conversion (e.g., buck conversion or boost conversion) on the input voltage of the voltage conversion module and then charge the battery module.

Exemplarily, this embodiment provides a control method of an online power supply and charging system, including the following steps executed by a vehicle controller:
controlling a voltage conversion module to perform voltage conversion on an output voltage of a battery module and supply a power to an electric motor module; or
controlling a vehicle-mounted charger module to supply power to the electric motor module and the battery module, and controlling the voltage conversion module to perform voltage conversion on an input voltage of the voltage conversion module or the output voltage of the battery module so as to charge the battery module or discharge the battery module.

In this embodiment of the present invention, in response to the vehicle-mounted charger module and the electric motor module being electrically connected, the vehicle-mounted charger module can supply the power to the electric motor module. In response to the battery module and the electric motor module being electrically connected, the battery module can supply the power to the electric motor module. In response to the electric motor module stopping running, the vehicle-mounted charger module can charge the battery module. In response to the output voltage of the battery module being lower than the required voltage of the electric motor module, the voltage conversion module can perform voltage conversion on the output voltage of the battery module and supply power to the electric motor module. In response to the vehicle-mounted charger module supplying power to the battery module and the electric motor module at the same time, the voltage conversion module is controlled to perform voltage conversion on the input voltage of the voltage conversion module or the output voltage of the battery module to charge or discharge the battery module.

Exemplarily, the controlling a voltage conversion module to perform voltage conversion on the output voltage of the battery module and supply the power to the electric motor module including:
controlling, in response to the vehicle-mounted charger module being electrically disconnected from the electric motor module and the voltage conversion module and in response to the output voltage of the battery module being less than a required voltage of the electric motor module, the switch module to electrically disconnect the battery module and the electric motor module, and boosting, through the voltage conversion module, the output voltage of the battery module and supplying power to the electric motor module.

In this embodiment of the present invention, in response to the vehicle-mounted charger module being electrically connected from the electric motor module and the voltage conversion module and in response to the output voltage of the battery module being less than the required voltage of the electric motor module, the system is in a vehicle-mounted charger offline mode. Since the current output voltage of the battery module cannot satisfy the required voltage of the electric motor module, the voltage conversion module needs to boost the output voltage of the battery module to the required voltage of the electric motor module before supplying power to the electric motor module, thereby maintaining the normal operation of the electric motor.

Exemplarily, the controlling a vehicle-mounted charger module to supply the power to the electric motor module and the battery module, and controlling the voltage conversion module to perform voltage conversion on an input voltage of the voltage conversion module or the output voltage of the battery module to charge the battery module or discharge the battery module including:
controlling, the switch module to electrically disconnect the battery module and the electric motor module, and boosting, through the voltage conversion module, the output voltage of the battery module and supplying the power to the electric motor module in response to the vehicle-mounted charger module being electrically disconnected from the electric motor module and the voltage conversion module and in response to the output voltage of the battery module being less than a required voltage of the electric motor module.

In this embodiment of the present invention, in response to the vehicle-mounted charger module is electrically connected to the voltage conversion module and the electric motor module, the system is in a vehicle-mounted charger module and battery module online mode. At this time, the switch module is controlled to electrically disconnect the battery module and the electric motor module, and the vehicle-mounted charger module supplies the power to the voltage conversion module and the electric motor module at the same time.

In response to the electric motor module suddenly stopping running and the vehicle-mounted charger module cannot respond in time and charges the battery module at high current, the voltage conversion module can boost the input voltage of the voltage conversion module to protect the normal charging of the battery module; and in response to the output voltage of the battery module being too low or the required voltage of the electric motor module is too high, the voltage conversion module can boost the output voltage of the battery module to normally supply the power to the electric motor module.

Exemplarily, the vehicle-mounted charger module is controlled to supply the power to the electric motor module, and the control method further including:
supplying, power to the electric motor module through the vehicle-mounted charger module in response to the switch module being turned off and between the vehicle-mounted charger module and the voltage conversion module are electrically disconnected.

In this embodiment of the present invention, in response to the switch module is turned off and the vehicle-mounted charger module and the voltage conversion module are electrically disconnected and in response to there is no three-phase alternating current input, the system is in a battery offline mode, and at this time, the vehicle-mounted charger module supplies the power to the electric motor module.

Exemplarily, the battery module is controlled to supply the power to the electric motor module, and the control method further including:
controlling, a switch module to electrically connect the battery module and the electric motor module; supplying, power to the electric motor module through the battery module in response to the vehicle-mounted charger module being electrically disconnected from the electric motor module and the voltage conversion module and in response to the output voltage of the battery module being greater than or equal to the required voltage of the electric motor module.

In this embodiment of the present invention, in response to the vehicle-mounted charger module being electrically disconnected from the electric motor module and the voltage conversion module, the system is in a vehicle-mounted charger offline mode; and in response to the output voltage of the battery module being greater than or equal to the required voltage of the electric motor module, it indicates that the normal output voltage of the battery module can satisfy the required voltage of the electric motor module. As a result, the switch module is directly controlled to electrically connect the battery module and the electric motor module, and the battery module supplies the power to the electric motor module.

Exemplarily, the vehicle-mounted charger module is controlled to charge the battery module, and the control method further including:
controlling, the switch module to electrically connect the vehicle-mounted charger module and the battery module; charging, the battery module through the vehicle-mounted charger module, in response to the electric motor normally stopping running.

In this embodiment of the present invention, in response to the electric motor normally stopping running, the system is in a battery being charged mode. As a result, the switch module is controlled to the electrically connect the vehicle-mounted charger module and the battery module, and the vehicle-mounted charger module charges the battery module.

It should be understood that in the above embodiments, an order of sequence numbers does not indicate an execution sequence, and execution sequences of the processes shall be determined based on functions and internal logics thereof and shall not impose any limitation to the implementation process of the embodiments of the present invention.

Those skilled in the art can clearly understand that, for the convenience and conciseness of description, the division of the above-mentioned functional units and modules is taken as an example. In actual applications, the above-mentioned functions can be completed by different functional units and modules according to needs, that is, the internal structure of the apparatus is divided into different functional units or modules to complete all or part of the functions described above. The functional units and modules in the embodiments may be integrated in one processing unit, or the units may physically exist separately, or two or more units may be integrated in one unit, and the above integrated unit may be implemented in the form of either hardware or software functional units. In addition, the specific names of the functional units and modules are for the convenience of distinguishing each other, and are not intended to limit the scope of protection of the present invention. For the specific working processes of the units and modules in the above system, reference may be made to the corresponding processes in the above-mentioned method embodiments, and details will not be repeated here.

In the above embodiments, the description for each embodiment has its own focus. For parts that are not described in detail or recorded in a certain embodiment, reference may be made to related descriptions of other embodiments.

A person of ordinary skill in the art may notice that the exemplary units and algorithm steps described with reference to the embodiments disclosed in this description can be implemented in electronic hardware, or a combination of computer software and electronic hardware. Whether these functions are executed in hardware or software depends on particular applications and design constraints of the technical solutions. A person skilled in the art may use different methods to implement the described functions for each particular invention, but it should not be considered that this implementation goes beyond the scope of the present invention.

In the embodiments provided by the present invention, it should be understood that the disclosed system and method may also be implemented in other manners. For example, the system embodiments described above are only schematic. For example, the division of modules or units is only a division of logical functions. In actual implementation, there may be other division manners, for example, multiple units or components may be combined or may be integrated into another system, or some features may be omitted or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate components may or may not be physically separated, and the components displayed as units may or may not be physical units, that is, they may be located in one place, or may be distributed in multiple network units. Part or all of the units may be selected according to actual needs to achieve the purposes of the solution of this embodiment.

In addition, the functional units in the embodiments of the present invention may be integrated into one processing unit, or the units may physically exist separately, or two or more units may be integrated into one unit. The above integrated unit may be implemented in the form of either hardware or software functional units.

The above embodiments are intended only to illustrate, but not limit the technical solutions of the present invention. Although the present invention has been described in detail with reference to the above-mentioned embodiments, those of ordinary skill in the art should understand that they can still modify the technical solutions described in the above-mentioned embodiments, or equivalently substitute some or all of the technical features. These modifications and substitutions do not make the essence of the corresponding technical solutions deviate from the spirit and scope of the technical solutions of the embodiments of the present invention, and shall all fall within the scope of protection of the present invention.

## Claims

1. An online power supply and charging system, applied to a construction machinery vehicle, comprising:
an electric motor module, configured to control an operation process of the construction machinery vehicle;
a battery module, configured to receive a electric energy or release electric energy;
a vehicle-mounted charger module, electrically connected with the electric motor module, and configured to be connected to an external power source to supply a power to the electric motor module;
a switch module, electrically connected with the electric motor module, the battery module and the vehicle-mounted charger module, configured to electrically connect or disconnect the battery module and the electric motor module, and configured to electrically connect or disconnect the vehicle-mounted charger module and the battery module;
a voltage conversion module, electrically connected with the switch module, the electric motor module, the battery module and the vehicle-mounted charger module, configured to perform voltage conversion on an output voltage of the battery module to supply power to the electric motor module, and perform voltage conversion on an input voltage of the voltage conversion module to charge the battery module.

2. The online power supply and charging system as claimed in claim 1, further comprising:
a vehicle controller, electrically connected with the electric motor module, the battery module, the vehicle-mounted charger module and the switch module, and configured to control a working state of the electric motor module, control a charging process of the battery module or a discharging process of the battery module, control the vehicle-mounted charger module to be connected to the external power source, and control an on-off state of the switch module.

3. The online power supply and charging system as claimed in claim 1, wherein the battery module comprises:
a power battery, electrically connected with the voltage conversion module and the switch module, configured to store the electric energy;
a battery management unit, electrically connected with the power battery and the voltage conversion module, and configured to control a charging process of the power battery or a discharging process of the power battery and control the voltage conversion module to perform voltage conversion on the input voltage of the power battery or the output voltage of the power battery.

4. The online power supply and charging system as claimed in claim 1, wherein the electric motor module comprises:
an electric motor, configured to supply the power to the construction machinery vehicle;
an electric motor controller, electrically connected with the electric motor, the vehicle-mounted charger module, the voltage conversion module and the switch module, configured to control the electric motor to operate.

5. The online power supply and charging system as claimed in claim 1, wherein the voltage conversion module comprises a bidirectional DC-DC converter.

6. The online power supply and charging system as claimed in claim 1, wherein the vehicle-mounted charger module comprises a direct-contact power taking apparatus and a non-contact power taking apparatus.

7. The online power supply and charging system as claimed in claim 1, wherein a battery capacity of the battery module is 10 to 50 KWh.

8. The online power supply and charging system as claimed in claim 1, wherein the switch module comprises an electromagnetic relay.

9. The online power supply and charging system as claimed in any of claims 1 to 8, wherein the construction machinery vehicle comprises a pure electric vehicle.

10. A control method of an online power supply and charging system, applied to the online power supply and charging system as claimed in any of claims 1 to 9, comprising:
controlling a voltage conversion module to perform voltage conversion on an output voltage of a battery module to supply a power to an electric motor module; or
controlling a vehicle-mounted charger module to supply power to the electric motor module and the battery module, controlling the voltage conversion module to perform voltage conversion on an input voltage of the voltage conversion module or the output voltage of the battery module to charge the battery module or discharge the battery module.

11. The control method as claimed in claim 10, wherein controlling the voltage conversion module to perform voltage conversion on the output voltage of the battery module and supply the power to the electric motor module comprises:
controlling, the switch module to electrically disconnect the battery module and the electric motor module, and boosting, through the voltage conversion module, the output voltage of the battery module to supply the power to the electric motor module in response to the vehicle-mounted charger module being electrically disconnected from the electric motor module and the voltage conversion module and the output voltage of the battery module being less than a required voltage of the electric motor module.

12. The control method as claimed in claim 10, wherein the controlling the vehicle-mounted charger module to supply the power to the electric motor module and the battery module, and controlling the voltage conversion module to perform voltage conversion on the input voltage of the voltage conversion module or the output voltage of the battery module to charge or discharge the battery module comprises:
controlling the switch module to electrically disconnect the battery module and the electric motor module, supplying power to the voltage conversion module and the electric motor module by the vehicle-mounted charger module, and performing voltage conversion on the input voltage of the voltage conversion module or the output voltage of the battery module to charge the battery module or discharge the battery module through the voltage conversion module in response to the vehicle-mounted charger module being electrically connected to the voltage conversion module and the electric motor module.

13. The control method as claimed in claim 10, further comprising:
supplying the power to the electric motor module through the vehicle-mounted charger module in response to the switch module being turned off and the vehicle-mounted charger module and the voltage conversion module being electrically disconnected.

14. The control method as claimed in claim 10, further comprising:
controlling a switch module to electrically connect the battery module and the electric motor module, supplying power to the electric motor module through the battery module in response to the vehicle-mounted charger module being electrically disconnected from the electric motor module and the voltage conversion module and the output voltage of the battery module being greater than or equal to the required voltage of the electric motor module.

15. The control method as claimed in claim 10, further comprising:
controlling the switch module to electrically connect the vehicle-mounted charger module and the battery module, and charging the battery module through the vehicle-mounted charger module in response to the electric motor normally stopping running.
